# EUROPEAN PATENT SPECIFICATION

(11) **EP 1 055 647 B1**
(45) Date of publication and mention of the grant of the patent: **26.04.2006**
(21) Application number: 00202909.8
(22) Date of filing: 17.10.1997
(51) Int. Cl.: C04B 18/14, C04B 28/02, C04B 26/26, C22B 7/04

(54) **Process for processing stainless steel slags**
Verfahren zur Behandlung von rostfreien Stahlschlacken
procédé de traitement de laitiers d acier inoxydable

(30) Priority: 17.10.1996 BE 9600883
(43) Date of publication of application: 29.11.2000
(62) Divisional of application: 97870157.1
(73) Proprietor: Trading and Recycling Company Sint Truiden, 3880 Sint Truiden (BE)
(72) Inventor: Van Schoonbeek, Daniel Joseph Louis, 3800 Sint-Truiden (BE); Celis, Serge Leon Hubert René, 3890 Gingelom (BE)
(74) Representative: Van Reet, Joseph

(56) References cited:
- EP-A- 0 542 330
- FR-A- 2 666 098
- FR-A- 2 700 161
- GB-A- 2 320 494
- US-A- 4 747 547
- CHEMICAL ABSTRACTS, vol. 97, no. 26, 27 December 1982 (1982-12-27) Columbus, Ohio, US; abstract no. 221850g, XP002032777 & JP 57 027862 B (KUBOTA LTD) 12 June 1982 (1982-06-12)
- CHEMICAL ABSTRACTS, vol. 85, no. 16, 18 October 1976 (1976-10-18) Columbus, Ohio, US; abstract no. 112186, YANA, MASAO: "Use of slag for aerated concrete manufacture" XP002054547 & JP 51 083623 A (JAPAN) 22 July 1976 (1976-07-22)
- KORTBAOUI A ET AL: "THE USE OF STAINLESS STEEL SLAG IN CONCRETE" CERAMIC TRANSACTIONS,, vol. 37, 1993, pages 77-90, XP002054546 ISSN: 1042-1122

## Description

The present invention relates to a process for processing stainless steel slags.

Just like the conventional, non-stainless steel slags, the slags derived from the production of stainless steel comprise mainly calcium oxide (CaO) and silicon dioxide (SiO₂). For the production of stainless steel, use is moreover additionally made of chromium. For martensitic stainless steel types, the chromium content comprises for example about 13 %, for stainless steel types of the ferritic type about 17.5% and for austenitic stainless steel types about 17.5-18 %. Austenitic stainless steel types comprise moreover additionally about 9 to 12 % of nickel. For the production of stainless steel, use is further usually made of calcium fluoride which is added more particularly for keeping the slags fluid.

In contrast to slags of conventional steel, stainless steel slags consequently contain from an environmental-hygienical point of view problematic amounts of chromium oxide (Cr₂O₃) and possibly of nickel oxide and/or fluorides. Since these harmful substances may leach out, it was up to now appropriate, and according to some legislations even obligatory, to dump the stainless steel slags as waste under controlled conditions. The percolate water of the dumped waste had then of course to be collected and if necessary purified.

The invention relates now more particularly to a process for processing stainless steel slags which are the most problematic from an environmental-hygienical point of view, namely those which contain in addition to calcium oxide (CaO), silicon dioxide (SiO₂), iron oxide (Fe₂O₃) and chromium oxide (Cr₂O₃), further nickel oxide (NiO) and/or fluorides. As a matter of fact, as it will appear hereinafter, chromium and fluorides leach out in the largest quantities. Also nickel oxide leaches out, this nickel being further moreover coupled, as described hereabove, to a high chromium content.

The invention has now as object to provide a new process for the processing of such stainless steel slags by which these environmental-hygienical problems can be avoided or solved and which allow in particular to use these steel slags as a (secondary) raw material.

To this end, the process according to the invention is characterized in that the stainless steel slags are crushed into particles which have a size of between 0 and x mm, where x is a value smaller than or equal to 60; at least a portion of these crushed steel slags is embedded in a hardenable matrix so as to produce asphalt containing the particles of the steel slags in a bound state; before crushing the stainless steel slags to said particle size, they are optionally subjected to a separation step wherein larger fragments, having a diameter larger than at least 60 mm, are removed therefrom; and in the case that all the fragments of the stainless steel slags which have a diameter larger than 60 mm would have been removed therefrom during said optional separation step, the stainless steel slags are crushed during said crushing step into particles which have a size of between 0 and x mm, where x is a value smaller than 60.

It has been observed that the fluorides and nickel and chromium oxides which are present did no longer cause any problem with respect to a possible too high leaching, in addition to which the particles of the thus crushed stainless metal slags showed the required rigidity for being applied into asphalt. It has also been found that the crushed stainless steel slags have a fairly cubic shape and an equilibrated grain composition so that asphalt having a relatively high compression strength can be produced. Moreover, compared to conventional steel or iron slags, the crushed stainless steel slags have a smaller free lime content and are thus less subjected to swelling so that they are much more suited for being used in asphalt.

In a preferred embodiment of the process according to the invention, the stainless steel slags are crushed into particles which have a size of between 0 and x mm, where x is a value larger than 10 mm, or in other words the stainless steel slags are crushed in such a manner that they comprise particles larger than 10 mm, smaller particles being of course also present unless they are sieved off afterwards.

An advantage of such larger particles is that, compared to smaller particles, the components thereof are less subjected to leaching. A further advantage is that especially the use of these coarser particles can provide asphalt with a high compression strength.

In a further preferred embodiment, the crushed steel slags are brought into contact with water, at least when they show a free lime content higher than 1 % by weight, until their free lime content comprises up to 1 % by weight at the most.

In this way, any swelling of the steel slags when coming into contact with moisture is reduced to such an extend that it does not cause any problem in asphalt.

Preferably, the stainless steel slags are crushed into particles which have a size of between 0 and x mm, where x is a value smaller than or equal to 30 mm, and preferably smaller than or equal to 20 mm.

In this way, a material having good, homogeneous mechanical properties is obtained. Moreover, in case of such particle sizes, it is easier to neutralise the free lime in order to reduce the swelling of the steel slags under the influence of moisture. Further, a larger amount of metallic remainders which are still present in the steel slags can be recycled therefrom.

For crushing the stainless steel slags, use is preferably made of a percussion breaker.

It has been found that by this type of breaker, a better cubicity of the particles can be assured.

In a particular embodiment of the process according to the invention, the crushed stainless steel slags are divided by sieving, preferably through a dry sieving process, into at least two different fractions. These different fractions can then be used in function of the asphalt which is to be produced.

Other advantages and particularities of the invention will become apparent from the following description of some particular embodiments of the process according to the invention and the crushed stainless steel slags which are obtained thereby. This description is only given by way of example and is not intended to limit the scope of the invention.

So, the invention generally relates to a process for processing slags which are produced in the production of stainless steel.

The production of stainless steel is usually done in three steps in each of which slags are produced. These are for example electric furnace slags, converter slags and VOD-final slags (Vacuum Oxidising Decarburation), in amounts of for example respectively about 8 % by weight, 14 % by weight and 3 % by weight, about 5 % by weight of rubble being further typically discarded. In each of these cases, the slag is composed on the basis of burned lime (CaO). This lime forms a molten protective layer onto the bath and thus protects the hot steel against oxidation. The lime moreover absorbs oxides and impurities so that a mixture of CaO and metal oxides (of transition metals) is produced. In the last phase, the non-refractory oxides are reduced with metallic Si, so that mainly a mixture of 2CaO.SiO₂ with small amounts of inert oxides and a little sulphur and/or phosphorus is produced. In order to make the reduction reaction to go on smoothly, fluor spar (CaF₂) is added which makes the slag liquid. A typical analysis of the produced slags is as follows :

| | |
|---|---|
| CaO | 40-60 % |
| SiO₂ | 20-30 % |
| MgO | ± 10 % |
| Fe₂O₃ | ± 2 % |
| MnO | ± 1 % |
| S | traces |
| F⁻ | some % |
| Cr₂O₃ | 1 to 10% |
| NiO | <1 % |

From analyses it appeared that the slags produced during the different steps have a similar composition.

The electric furnace slag, which is produced on the electric melting furnace for stainless steel, comprises more particularly mainly CaO, MgO and SiO₂. In addition, it contains elements which are produced by oxidation of the elements which are present in the scrap iron, namely FeO, Cr₂O₃, NiO and Al₂O₃. Further, small amounts of impurities may also be present such as ZnO, PbO, TiO₂ and CuO.

The converter slag is formed during the refining of the stainless steel melt by blowing in oxygen, the carbon content being reduced by means of this oxygen from at the most 2.5 % to about 0.3 %. In principle, it has the same composition as the electric furnace slag. Due to the better reduction, the content of non-ferro alloy elements is however substantially lower.

The VOD-final slag is obtained by refining (oxygen blowing) under vacuum resulting in a further reduction of the carbon content, more particularly to about 0.05 %. Due to the even better reduction as converter slag, this slag quasi does not contain any non-ferro-elements anymore. The total Cr content in the electric furnace slag has been observed to be significantly higher than this in the VOD and the converter slag.

In practice, the mixed stainless steel slags are crushed by means of pincers and hydraulic breaking hammers on machines or cranes into bits and pieces having sizes which may vary from 0 up to 2000 mm at the most. The metallic metal pieces which are present in the thus crushed steel slags are removed manually. The recycled metallic material, which is sufficiently pure, is taken up back into the production.

According to the invention, the roughly broken steel slags, from which the largest metallic metal pieces have preferably already been removed, are further crushed to a particle size which is mainly smaller than about 60 mm at the most, which can be done in one or more steps, in other words crushing processes. It will be clear that after the applied crushing processes, most of the particles may meet the required particle size but that there will always remain an amount of larger particles which may however be sieved off and possible be crushed again. As it will be described further hereinafter, the mass of stainless steel slags does not have to be crushed as such but it is possible to remove larger fragments in advance therefrom, in particular by sieving.

For crushing the rough steel slag pieces, use can be made of various breaker types such as percussion breakers, hammer breakers, conical and rotary crushers and jaw crushers, preference being clearly given, at least in a first phase, to a jaw crusher provided with an antiblocking system in view of the high efficiency which can be reached therewith and since this crusher is the most resistant against the hard material. This jaw crusher is preferably applied to comminute the steel slags to fragments of up to for example 300 mm at the most. This does not alter the fact that - except for the problems of possible hammer breaking - a percussion or hammer breaker achieves a same efficiency and produces even qualitatively more and better suited product, in other words a better grain formation (cube), and enables even to achieve directly the desired particle size of from 0 to about 60 mm. Possibly, the excess above 60 mm will be further crushed after sieving until the entire mass has been reduced to a particle size of up to about 60 mm at the most.

For the final comminution to a particle size of about 60 mm at the most, the same breaker types can be used but in this case preference is clearly given to the use of a percussion breaker. According to the invention, it has indeed been found that by means of a percussion breaker the metal rests (about 1 to 20 % of the crushed steel slags) which are still present are moreover freed by the percussion a.o. from the lime stone and that by means of this type of breaker a better cubicity of the particles can be assured which assures more efficient application possibilities.

After having crushed the steel slags, they can be separated for example by one or more sieving operations into different fractions, in addition to which it is for example possible to crush the largest fraction or "oversize" again. Such a sieving operation can therefore already be applied before the desired particle size is achieved.

After having crushed the steel slags, still further metal rests are preferably also removed therefrom, in other words recycled, destined as raw material a.o. for the production of new stainless steel. This can be done visually and manually and/or by automatic and/or mechanical systems. Use can for example be made of magnetic separation systems and this in function of the crushed fraction which is to be treated and which can be obtained in particular by one or more sieving operations. For the coarser fractions, use is preferably made of a top belt magnet, for the finer fractions a head roller magnet and for the fractions of for example 0 to 7 mm a tube magnet. Besides magnetic separation systems, use can also be made for the non-magnetic metal fractions, including nickel and chromium, of induction current systems, i.e. Foucault or E. Current systems, with a top belt, head roller, or further "tube" installation and also sieving systems, preferably dry sieving systems, in order to avoid polluted waste water, based on gravity and/or air and vibration system separations.

The use of these separation systems enables to recycle on average 1 to 20 % of steel fragments from the crudely crushed material and to use these again in the basic stainless steel production process. It is clear that the amount of slags is reduced hereby. In other words, the metallic parts can be taken up again as a valuable raw material for making stainless steel, the remaining matter, as will be described further hereinafter according to the invention, as stone granulate and/or cement aggregate (= to be used as raw material for cement).

Due to the fact that the slags are crushed more finely according to the invention, a larger surface of these slags is exposed so that there is a greater risk for leaching of harmful substances, in particular of Cr₂O₃, NiO and F⁻. In order to avoid this, the particles of the crushed slags are bound according to the invention with one another to produce a shape retaining mass, more particularly asphalt, containing the particles of the crushed steel slags in a bound state. To this end, use is made of a hardenable matrix for producing asphalt with the crushed stainless steel slags. As an alternative, which is not in accordance with the present invention as claimed in the appended claims, the hardenable matrix can also be based on a hydraulically binding agent such as cement, fly ash and/or a fine fraction of the crushed steel slags and/or on a synthetic material, for example thermoplastic waste plastic. In general, the crushed slags are used in so-called moulded applications in order to neutralise the baleful leaching behaviour of the comminuted fragments.

A first embodiment which is not in accordance with the method according to the invention consists in that use is made as hydraulically binding agent of cement. This cement can for example be used to bind a fine fraction of the crushed slags, having a particular size of for example 0 to 3-4 or 5 mm, to form a stabilisation layer which hardens by the uptake of moisture from the bottom or by moistening with water. Additionally, a coarser fraction of the crushed slags can also be applied, possibly in combination with sand instead of with said fine fraction. By the addition of water and the required amount of cement, in combination with natural and/or stainless steel sand, it is moreover possible to make concrete from the crushed slags. Of course, use can then also be made of the usual raw materials of concrete such as sand (both natural and synthetic sand originating from industrial processes, for example Metamix® and pyrite) and (Maas)gravel or crushed lime stone and the like. According to the invention, the crushed steel slags offer thus a valuable alternative raw material for replacing these materials, and this of course depending on the particle size of the employed fraction. This goes both for the production of concrete and, in accordance with the process according to the present invention, for the production of asphalt (inclusive filler) or of plastic bound materials, or further for the preparation as aggregate in concrete, building and pointing mortars.

According to the invention, it has more particularly been found that the crushed steel slags, and especially the coarser fraction thereof, had excellent mechanical properties a.o. as to hardness (PTV-road metal class S1) and that they had a fairly cubic or round shape and are thereby, in contrast to other, more flat materials such as for example "grès-road metal material", very suited for being used in particular in concrete or asphalt, all the more in view of their equilibrated grain composition. The hardness as well as the cubic grain shape result in that the material is particularly suited for example for top and/or metalling layers in road construction. From tests it appeared that, based on the crushed steel slags, concrete can be made, the specific weight of which is somewhat higher than the specific weight of a same concrete on the basis of gravel, namely about 2500 kg/m³ instead of about 2350 kg/m³, but the compression strength of which can be about 1.5 times higher. Binding experiments on cement, wherein wash water of the steel slags and conventional water were used, have shown that the material originating from the steel slags provide for an accelerated binding. Consequently, the crushed steel slags show themselves also intrinsic hydraulically binding properties.

Hence, it is possible to use the fine fraction of the crushed steel slags, having for example a grain size of 0 to 4 mm, in combination with a coarser granulate so as to compose a hydraulic mixed granulate which hardens when coming into contact with water and when being preferably compacted. In other words, this fine fraction can thus be used as cement aggregate. The coarser granulate can be formed by the coarser fraction of the crushed steel slags and/or by another granulate such as gravel, crushed lime stone, concrete and stone rubble, etc. From environmental hygienical considerations, preference has to be given to the use of a combination of the slag granulate with the crushed stone material because in this way the leaching is further reduced, in particular the leaching of fluorides. Crushed stone rubble may for example be mixed with 5 to 20 % of stainless steel slags crushed to a same or a smaller particle size. The hydraulic mixed granulate can be obtained automatically when crushing the steel slags sufficiently finely or can be composed by means of fractions previously sieved off. It can be applied for example as a stabilisation layer underneath roads or the like, in which case it is of course compacted and brought into contact with water or moisture so as to form the shape retaining hard mass wherein the harmful elements are bound. Whether with or without an additional binding agent, such as cement, fly ash, asphalt or plastic, a sufficient hardness can be obtained in this way, in particular a hardness of for example at least 2 MPa.

As already discussed hereinabove, the stainless steel slags are crushed according to the invention to a particle size of about 60 mm at the most. In this way, a quite homogeneous mixture is obtained, the particles or pebbles of which are quite identical and have for example a substantially identical hardness and porosity. When crushing, in particular with the percussion breaker, it has indeed been observed that the more porous or less hard particles are broken more finely, possibly even into sand, so that the larger particles had more homogeneous properties. This effect is even still more pronounced if the steel slags are crushed to a particle size of about 30 mm, most preferred being the case wherein the steel slags are crushed to a particle size of about 0 to 20 mm at the most. From the so-crushed steel slags, the required fractions can then be sieved off in function of the bound application modalities or mixed granulate possibilities.

Crushing the stainless steel slags is not only important to obtain a material having good, homogeneous mechanical properties, but is also important to enable, when the steel slags contain a too large amount of free lime, to neutralise this lime to a sufficient extent with water. It has indeed been observed that this free lime may later, after a long exposure to moisture, start to swell and thus cause deformations for example in a concrete road surface wherein the crushed steel slags have been applied. Although the amount of free lime which is present can vary to a considerable extent, this is much less the case with the stainless steel slags used in the process according to the invention than with the conventional steel or iron slags, which are hereby not directly and immediately suited for being employed as alternative raw material in concrete products, and the crushed steel slags are preferably according to the invention to be subjected to an ageing process for at least 3 weeks, for example for one month, during which process the crushed steel slags are brought into contact with water in order to neutralise the free lime to a maximum. To this end, the crushed steel slags can be sprayed with water or may possibly be stored in a water bath. The ageing period is preferably adjusted in function of the observed amount of free lime. The crushed steel slags are preferably allowed to age until the content of free lime comprises up to 1 % by weight at the most and preferably up to 0.1 % by weight at the most. In view of the neutralisation of the free lime, use is preferably to be made for the production of concrete of a finer fraction of the crushed steel slags, for example a 0-40 fraction which has been sieved off out of these crushed steel slags.

Finally, the possibility is offered according to the invention to remove larger fragments from the partially crushed stainless steel slags, more particularly by sieving, since it has been found that the harmful substances which are present are also better protected against leaching in these larger fragments. To this end, these larger fragments have preferably a diameter larger than at least 60 mm. It will be clear that the larger the diameter, the less leaching will occur. The larger fragments are preferably removed from these stainless steel slags which contain the smallest amount of harmful substances, preference being more particularly given to the converter slags or possibly to the VOD-slags having however a somewhat higher nickel content. The electric furnace slags on the contrary are less appropriate in view of their considerably higher chromium content. The removed larger fragments can be used as monolithic rock for building and/or reinforcement works, applications in water being in particular taken into consideration, for example applications as bank or dike reinforcement or as basis for piers of bridges and the like. In this application, the stones are kept normally together in steel nets.

When all fragments having a diameter larger than 60 mm are previously removed, it is still important according to the invention for the moulded applications of the remaining smaller fractions of the stainless steel slags to subject these to a crushing process because, as described hereinabove, the properties of the particles become more homogeneous thereby and are of a better quality for being applied for example in concrete or the like.

In summary, the crushed stainless steel slags can be used in all kinds of moulded applications wherein the particles of the crushed steel slags are embedded in a hardenable matrix, and are used according to the invention in particular into asphalt, so that the harmful elements do no longer raise problems as to leaching.

### Leaching tests

The leaching behaviour of the crushed steel slags were examined as such, more particularly according to the instructions provided by Art. 109 of the Belgian Vlarem II legislation.

A mixture of the three types of stainless steel slags were crushed thereto to a particle size of 0-20 mm, from which the 4-7 mm fraction was subsequently sieved off. This fraction was immersed for 64 days at room temperature in a 10-times larger volume of demineralized water acidified by means of nitric acid to a pH of 4.0, whereafter the different parameters as shown in the Table 1 below were measured.

**TABLE I Leaching behaviour of crushed mixture of stainless steel slags**

| Analysis parameter | |
|---|---|
| Arsenic (mg/l) | < 5 |
| Cadmium (mg/1) | < 0.4 |
| Chromium (mg/1) | 72 |
| Copper (mgll) | < 3 |
| Lead (mg/l) | < 2 |
| Nickel (mg/l) | < 3 |
| Zinc (mg/1) | < 10 |
| Conductivity (mS/cm) | 820 |
| pH | 11.6 |
| Chloride (mg/l) | < 4 |
| Fluoride (mg/l) | 3.3 |

From this table it appears that especially chromium and fluoride cause problems as to leaching, which has been confirmed in other tests, namely in tests in conformity with the procedure developed by CEN/TC292/WG2 (European compliance test for granular waste) which is a two-step leaching test, more particularly a modified DIN 38414-S4 test. From these latter tests it appeared, for another sample of crushed stainless steel slags, that the leachability was for chromium on average 2.2 mg/kg and for fluoride 90 mg/kg whilst the leachability of nickel was lower than 0.24 mg/kg. Consequently, especially chromium and fluoride cause problems, in unbounded state, as to leachability.

## Claims

1. A process for processing stainless steel slags containing besides calcium oxide, silicon dioxide, iron oxide and chromium oxide further at least nickel oxide, **characterized in that** the stainless steel slags are crushed into particles which have a size of between 0 and x mm, where x is a value smaller than or equal to 60; at least a portion of these crushed steel slags is used to replace sand and/or a coarser material in the production of asphalt, said portion of the crushed steel slags beingembedded in a hardenable matrix so as to produce said asphalt containing the particles of the steel slags in a bound state; before crushing the stainless steel slags to said particle size, they are optionally subjected to a separation step wherein larger fragments, having a diameter larger than at least 60 mm, are removed therefrom; and in the case that all the fragments of the stainless steel slags which have a diameter larger than 60 mm would have been removed therefrom during said optional separation step, the stainless steel slags are crushed during said crushing step into particles which have a size of between 0 and x mm, where x is a value smaller than 60.

2. A process according to claim 1, **characterized in that** the stainless steel slags are crushed into particles which have a size of between 0 and x mm, where x is a value smaller than or equal to 30.

3. A process according to claim 2, **characterised in that** x is a value smaller than or equal to 20 mm.

4. A process according to any one of the claims 1 to 3, **characterized in that** at least when the crushed steel slags show a free lime content higher than 1 % by weight, they are brought into contact with water until their free lime content comprises up to 1 % by weight at the most.

5. A process according to claim 4, **characterised in that** the crushed slags are brought into contact with water until their free lime content comprises up to 0.1 % by weight at the most.

6. A process according to any one of the claims 1 to 5, **characterized in that** the stainless steel slags are crushed to said particle size by means of a percussion breaker.

7. A process according to any one of the claims 1 to 6, **characterized in that** metallic remainders which are still present in the steel slags crushed to said particle size are recycled therefrom.

8. A process according to any one of the claims 1 to 7, **characterized in that** the crushed stainless steel slags are divided by sieving, preferably through a dry sieving process, into at least two different fractions, said portion of the slags, which is used to produce the asphalt, being composed of at least one of these different fractions.

9. A process according to claim 8, **characterised in that** said different fractions comprise a fraction with a grain size of 0 to 4 mm and a further fraction with a grain size larger than 4 mm and/or a fraction with a grain size of 0 to 7 mm and a further fraction with a grain size larger than 7 mm.

10. A process according to any one of the claims 1 to 9, **characterized in that** a further portion of the crushed stainless steel slags is used as filler in the production of the asphalt.

11. A process according to any one of the claims 1 to 10, **characterized in that** x is a value larger than 4 mm and said portion of the slags, which is used to produce the asphalt, comprises at least a fraction of the crushed slags with particles having a size larger than 4 mm.

12. A process according to claim 11, **characterised in that** x is a value larger than 10 mm and said portion of the slags, which is used to produce the asphalt, comprises at least a fraction of the crushed slags with particles having a size larger than 10 mm.

## Revendications

1. Procédé de traitement de laitiers d'acier inoxydable contenant, outre de l'oxyde de calcium, du dioxyde de silicium, de l'oxyde de fer et de l'oxyde de chrome, en plus au moins de l'oxyde de nickel, **caractérisé en ce que** les laitiers d'acier inoxydable sont broyés en particules qui ont une taille comprise entre 0 et x mm, où x est une valeur inférieure ou égale à 60, au moins une partie de ces laitiers d'acier broyés est utilisée pour remplacer le sable et / ou un matériau plus grossier dans la production d'asphalte, ladite partie des laitiers d'acier broyés étant incorporée dans une matrice durcissable de manière à produire de l'asphalte contenant les particules des laitiers d'acier dans un état lié; avant de broyer les laitiers d'acier inoxydable à ladite taille particulaire, ils sont facultativement soumis à une étape de séparation dans laquelle les fragments plus grands, ayant un diamètre supérieur à au moins 60 mm, sont enlevés de ceux-ci; et dans le cas où tous les fragments des laitiers d'acier inoxydable qui ont un diamètre supérieur à 60 mm ont été enlevés de ceux-ci au cours de ladite étape de séparation facultative, les laitiers d'acier inoxydable sont broyés pendant ladite étape de broyage en particules qui ont une taille comprise entre 0 et x mm, où x est une valeur inférieure à 60.

2. Procédé selon la revendication 1, **caractérisé en ce que** les laitiers d'acier inoxydable sont broyés pour obtenir des particules qui ont une taille comprise entre 0 et x mm, où x est une valeur inférieure ou égale à 30 mm.

3. Procédé selon la revendication 2, **caractérisé en ce que** x est une valeur inférieure ou égale à 20 mm.

4. Procédé selon une quelconque des revendications 1 à 3, **caractérisé en ce qu'**au moins quand les laitiers d'acier broyés présentent une teneur en chaux libre supérieure à 1 % en poids, ils sont mis en contact avec de l'eau jusqu'à ce que leur teneur en chaux libre constitue jusqu'à 1 % en poids au maximum.

5. Procédé selon la revendication 4, **caractérisé en ce que** les laitiers broyés sont mis en contact avec de l'eau jusqu'à ce que leur teneur en chaux libre constitue jusqu'à 0,1 % en poids au maximum.

6. Procédé selon une quelconque des revendications 1 à 5, **caractérisé en ce que** les laitiers d'acier inoxydable sont broyés à ladite taille de particule au moyen d'un broyeur à percussion.

7. Procédé selon une quelconque des revendications 1 à 6, **caractérisé en ce que** des restes métalliques qui sont encore présents dans les laitiers d'acier broyés à ladite taille de particule sont recyclés.

8. Procédé selon une quelconque des revendications 1 à 7, **caractérisé en ce que** les laitiers d'acier inoxydable broyés sont divisés par criblage, de préférence par un procédé de criblage à -sec, eh au moins deux fractions différentes, ladite partie des laitiers qui est utilisée pour produire de l'asphalte étant composée d'au moins une de ces différentes fractions.

9. Procédé selon la revendication 8, **caractérisé en ce que** lesdites différentes fractions comprennent une fraction ayant une taille de grain de 0 à 4 mm et une autre fraction ayant une taille de grain supérieure à 4 mm et / ou une fraction ayant une taille de grain de 0 à 7 mm et une autre fraction avec une taille de grain supérieure à 7 mm.

10. Procédé selon une quelconque des revendications 1 à 9, **caractérisé en ce qu'**une autre partie des laitiers d'acier inoxydable broyés est utilisée comme matière de remplissage dans la production de l'asphalte.

11. Procédé selon une quelconque des revendications 1 à 10, **caractérisé en ce que** x est une valeur supérieure à 4 mm et ladite partie des laitiers qui est utilisée pour produire l'asphalte comprend au moins une fraction des laitiers broyés avec des particules ayant une taille supérieure à 4 mm.

12. Procédé selon la revendication 11, **caractérisé en ce que** x est une valeur supérieure à 10 mm et ladite partie des laitiers qui est utilisée pour produire l'asphalte comprend au moins une fraction des laitiers broyés avec des particules ayant une taille supérieure à 10 mm.

## Patentansprüche

1. Ein Verfahren zur Behandlung von rostfreien Stahlschlacken, die neben Calciumoxid, Siliziumdioxid, Eisenoxid und Chromoxid ferner zumindest Nickeloxid enthalten, **dadurch gekennzeichnet, dass** die rostfreien Stahlschlacken in Partikel gebrochen werden, die eine Größe von zwischen 0 und x mm haben, wobei x ein Wert kleiner oder gleich 60 ist; zumindest ein Teil dieser gebrochenen Stahlschlacken wird in der Produktion von Asphalt zum Ersatz von Sand und/oder einem gröberen Material verwendet, wobei der erwähnte Teil der gebrochenen Stahlschlacken in eine härtbare Matrix eingebettet wird, um den erwähnten Asphalt zu produzieren, der die Partikel der Stahlschlacken in einem gebundenen Zustand enthält; bevor die rostfreien Stahlschlacken in die erwähnte Partikelgröße gebrochen werden, werden sie optional einem Separationsschritt unterzogen, bei dem größere Fragmente mit einem Durchmesser von mindestens 60 mm daraus entfernt werden; und wenn alle Fragmente der rostfreien Stahlschlacken mit einem Durchmesser von über 60 mm während des erwähnten Separationsschrittes daraus entfernt wurden, werden die rostfreien Stahlschlacken während des erwähnten Brechvorgangs in Partikel gebrochen, die eine Größe zwischen 0 und x mm haben, wobei x ein Wert kleiner als 60 ist.

2. Ein Verfahren nach Anspruch 1, **dadurch gekennzeichnet, dass** die rostfreien Stahlschlacken in Partikel gebrochen werden, die eine Größe von zwischen 0 und x mm haben, wobei x ein Wert größer als 10 und kleiner oder gleich 30 ist.

3. Ein Verfahren nach Anspruch 2, **dadurch gekennzeichnet, dass** x ein Wert kleiner oder gleich 20 mm ist.

4. Ein Verfahren nach einem der Ansprüche 1 bis 3, **dadurch gekennzeichnet, dass**, zumindest wenn die gebrochenen Stahlschlacken einen freien Kalkgehalt von mehr als 1 Gew.% aufweisen, sie mit Wasser in Kontakt gebracht werden, bis ihr freier Kalkgehalt höchstens 1 Gew.% beträgt.

5. Ein Verfahren nach Anspruch 4, **dadurch gekennzeichnet, dass** die gebrochenen Schlacken in Kontakt mit Wasser gebracht werden, bis ihr freier Kalkgehalt bis zu höchstens 0,1 Gew.% beträgt.

6. Ein Verfahren nach einem der Ansprüche 1 bis 5, **dadurch gekennzeichnet, dass** die rostfreien Stahlschlacken durch einen Schlagbrecher in die erwähnte Partikelgröße gebrochen werden.

7. Ein Verfahren nach einem der Ansprüche 1 bis 6, **dadurch gekennzeichnet, dass** die Metallreste, die noch in den in die erwähnte Teilchengröße gebrochenen Stahlschlacken anwesend sind, daraus wiederverwertet werden.

8. Ein Verfahren nach einem der Ansprüche 1 bis 7, **dadurch gekennzeichnet, dass** die gebrochenen rostfreien Stahlschlacken durch Aussieben, vorzugsweise durch ein Siebverfahren, in zumindest zwei verschiedene Fraktionen getrennt werden, wobei der Teil der Schlacken, der zur Herstellung des Asphalts verwendet wird, aus zumindest einer dieser Fraktionen besteht.

9. Ein Verfahren nach Anspruch 8, **dadurch gekennzeichnet, dass** die erwähnten verschiedenen Fraktionen eine Fraktion mit einer Korngröße von 0 bis 4 mm und eine weitere Fraktion mit einer Korngröße über 4 mm und/oder eine Fraktion mit einer Korngröße von 0 bis 7 mm und eine weitere Fraktion mit einer Korngröße über 7 mm umfassen.

10. Ein Verfahren nach einem der Ansprüche 1 bis 9, **dadurch gekennzeichnet, dass** ein weiterer Teil der gebrochenen rostfreien Stahlschlacken als Füllstoff in der Herstellung des Asphalts verwendet wird.

11. Ein Verfahren nach einem der Ansprüche 1 bis 10, **dadurch gekennzeichnet, dass** x ein Wert über 4 mm ist und dass der erwähnte Teil der Schlacken, der zur Herstellung des Asphalts verwendet wird, zumindest eine Fraktion der gebrochenen Schlacken mit Partikeln umfasst, die größer als 4 mm sind.

12. Ein Verfahren nach Anspruch 11, **dadurch gekennzeichnet, dass** x ein Wert über 10 mm ist und dass der erwähnte Teil der Schlacken, der zur Herstellung des Asphalts verwendet wird, zumindest eine Fraktion der gebrochenen Schlacken mit Partikeln umfasst, die größer als 10 mm sind.
